# EUROPÄISCHE PATENTSCHRIFT

(11) **EP 0 490 395 B1**
(45) Veröffentlichungstag und Bekanntmachung des Hinweises auf die Patenterteilung: **28.08.1996**
(21) Anmeldenummer: 91121394.0
(22) Anmeldetag: 12.12.1991
(51) Int. Cl.: H02P 6/00

(54) **Anordnung und Verfahren zur Kommutierung von bürstenlosen Gleichstrommotoren**
Device and method to commutate a brushless DC motor
Dispositif et procédé pour faire la commutation d'un moteur à courant continu sans balai

(30) Priorität: 13.12.1990 DE 4039886
(43) Veröffentlichungstag der Anmeldung: 17.06.1992
(73) Patentinhaber: PAPST LICENSING GmbH, 78549 Spaichingen (DE)
(72) Erfinder: von der Heide, Johann, W-7230 Schramberg (DE); Hermann, Michael, W-7730 Villingen-Schwenningen (DE); Müller, Uwe, W-7821 Eisenbach 3 (DE)
(74) Vertreter: Göhring, Robert, Dipl.-Ing.

(56) Entgegenhaltungen:
- EP-A- 0 251 785
- FOURTH INT. CONF. ON POWER ELECTRONICS AND VARIABLE-SPEED DRIVES, 19. Juli 1990, London GB, Seiten 249-252; N.H. MVUNGI et al.: "A new sensorless position detector for SR drives"

## Beschreibung

Die Erfindung betrifft Verfahren und zugehörige Anordnungen, um kollektorlose Gleichstrommotoren ohne externe Positionssensoren zu kommutieren. Solche Anordnungen und Verfahren sind z.B. beschrieben in der älteren PCT-Anmeldung WO-A-9015473, auf die hier in vollem Umfange Bezug genommen wird zur Vermeidung von Wiederholungen.
Die dort beschriebenen Verfahren gestatten eine vergleichsweise genaue Bestimmung von Rotorpositionen, anhand derer ein Kommutierungsentscheid für einen Motor vorgenommen werden kann. Je nach vorgegebenen Genauigkeitsansprüchen erfordert die Positionsermittlung unterschiedlich lange Analysezeiten, die bei weniger leistungsstarken Prozessoren nachteilig in Erscheinung treten, insbesondere wenn zu Kommutierungszwecken auf besonders hohe Präzision der Positionsermittlung verzichtet werden kann.
Es ist Aufgabe der Erfindung, den dort beschriebenen prinzipiell erforderlichen Rechenaufwand weiter zu reduzieren, insbesondere für jene Verfahren, welche sich einer Schwerpunktsanalyse oder einer diskreten Fouriertransformation bedienen.
Obwohl die im folgenden beschriebene Kombination von Kommutierungselektronik und zugehörigen Verfahren vorzugsweise bei Motoren mit sechs Statorpolen und vier Rotorpolen genutzt wird, eignmet sie sich auch für viele andere Motortypen und darüberhinaus zur vereinfachten Meßwertbestimmung von optischen, magnetischen und kapazitiv arbeitenden Sensoren, welche auf vergleichbare Art und Weise ausgewertet werden können. Zur Anwendung des Verfahrens sind mindestens zwei Meßergebnisse bereitzustellen, anhand derer eine erforderliche, korrekte Kommutierungsinformation gewonnen wird , um einen genannten Motor in gewünschter Richtung anlaufen zu lassen bzw. weiterlaufen zu lassen.
In einem technisch besonders wichtigen Anwendungsfall besteht eine spezielle Teilaufgabe darin, aus einer Verteilung von insgesamt 6 Meßwerten schnellstmöglich ein korrektes Kommutierungssignal zu erzeugen.

Die genannte Aufgabe wird gelöst durch ein Zusammenwirken der vorgesehenen Ansteuereinheit zur Kommutierung eines kollektorlosen Gleichstrommotors mit Verfahren gemäß Anspruch 1 und Vorrichtung gemäß Anspruch 10.

Das erforderliche Zusammenspiel von Motor , Ansteuerung und zugehörigen Auswerteverfahren bzw. Mustererkennungsverfahren wird in den Zeichnungen und der nachfolgenden Beschreibung näher erläutert.

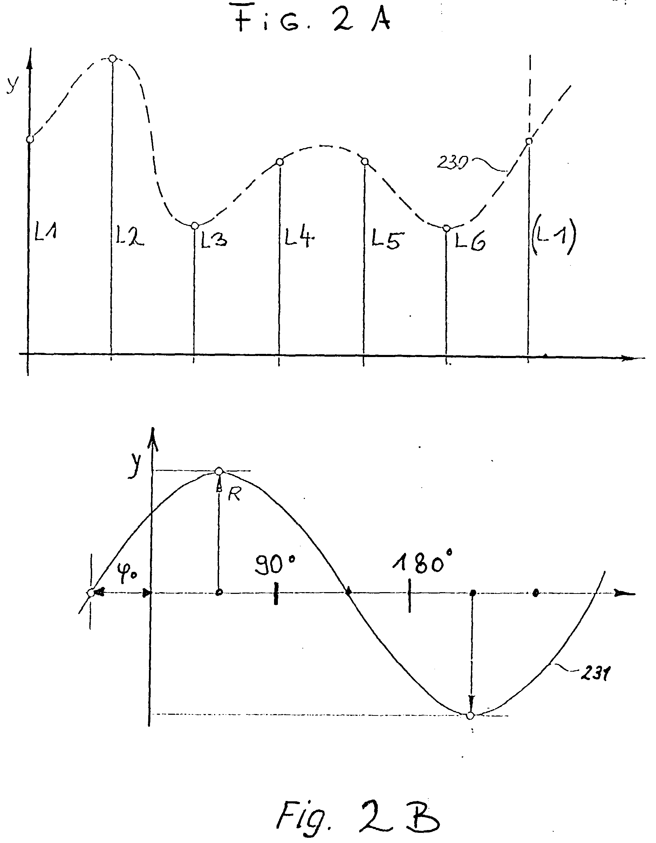

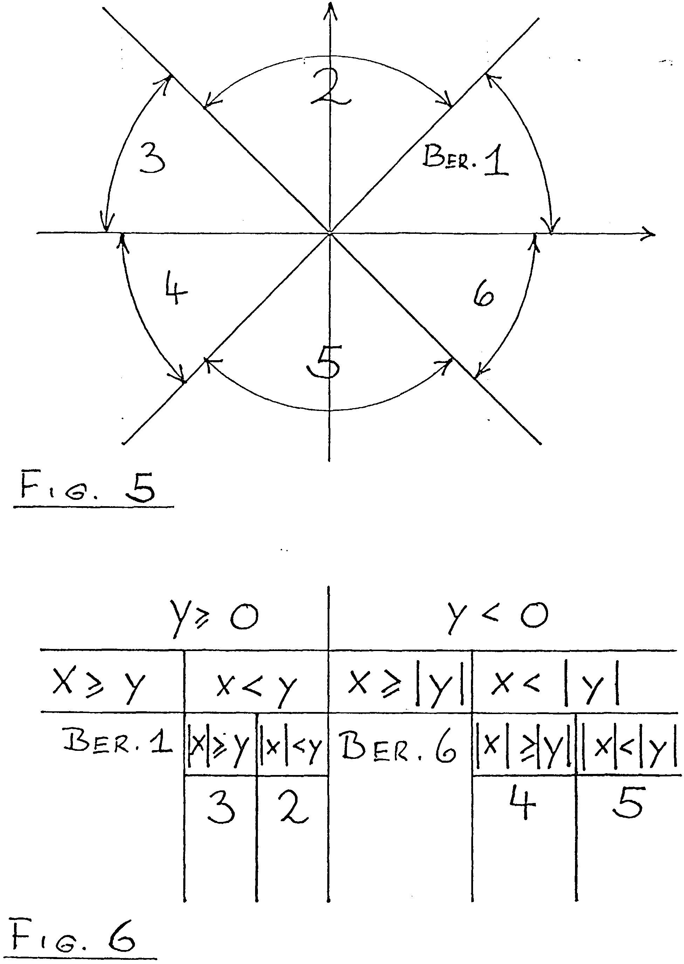

Es zeigt:
Fig. 1
   eine Ansteuereinheit für einen kollektorlosen Motor
Fig. 2 A
   eine Funktion mit 6 Stützstellen, Fig. 2 B die zugehörige Grundwelle sowie deren Phasenlage
Fig. 3
   ein Schaubild zur Erläuterung der grundlegenden Verfahrensweise zur Erzeugung erforderlicher Kommutierungssignale auf Basis einer Mustererkennung, welche auf dem Prinzip einer Phasenlagenbestimmung beruht.
Fig. 4
   ein Schaubild zur schnellen Auswertung von zusammengefaßten Meßwerten
Fig. 5 ein Diagramm zur Darstellung von Kommutierungsbereichen
Fig. 6
   ein Diagramm für einen Kommutierungsentscheidungsvorgang
Fig. 7
   eine Folge von Meßwerten, die Stützwerte einer Funktion bilden, die durch hohen Oberwellengehalt gekennzeichnet ist
Fig. 8
   eine Folge von Meßwerten, die Stützwerte einer Funktion bilden, die durch geringen Oberwellengehalt gekennzeichnet ist.
Fig. 9
   eine dreidimensionale Darstellung für Korrekturfunktionen, deren Form sich in Abhängigkeit von einem zusätzlichen Parameter ändert

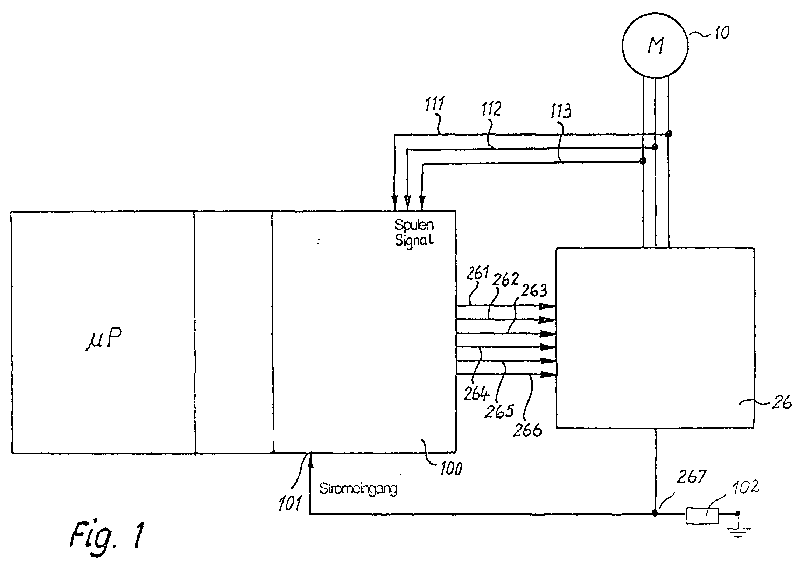

Fig. 1 zeigt das Blockschaltbild für eine Kombination von Ansteuerelektronik 100, Leistungsstufe 26 und Motor 10.
Die Ansteuerelektronik 1, vorzugsweise in Form eines Prozessors, verschafft sich Informationen über einen aktuellen Status des Motors 10 entweder durch Beobachtung der an den Spulen anliegenden Spannungen 111, 112, 113 oder der an einer Strommeßeinrichtung 102 abgreifbaren Spannung 267, welche einem Stromeingang 101 zugeführt wird. Voraussetzung für eine Strommessung ist natürlich ein Kommutierungszustand für den Motor 10, der zu einem Stromfluß durch den Motor führt. Dies wird bewirkt durch geeignete Beschaltung von Kommutierungssignalleitungen 261 bis 266, welche nicht näher gezeichnete Schalteinrichtungen der Leistungsstufe 26 betätigen und auf diese Weise eine gezielte Bestromung einzelner oder mehrerer Phasen eines solchen Motors bewirken, wie dies nach dem Stande der Technik eingehend bekannt ist und hier im Detail nicht wiederholt werden soll.
Es sei nur erwähnt, daß für einen kollektorlosen Motor mit drei Phasen, wie hier gezeichnet, eine Anzahl von sechs Kommutierungssignalleitungen dazu geeignet ist, insgesamt sechs Schalter der Leistungsstufe 26 direkt zu betätigen, so daß fallweise positiver oder negativer Stromfluß durch einzelne Spulen des Motors einsetzt. Gewöhnlich ist die Summe aller Einzelstromflüsse jedoch so, daß an der Strommeßeinrichtung 101 nur eine einheitliche Stromrichtung vorliegt, unabhängig vom Schaltzustand der Leistungsstufe 26.
Insbesondere kann sich die Ansteuerelektronik 100 eine Information über den Motorstatus, und hier speziell über die Läuferlage des Motors, dadurch beschaffen, daß außerhalb normaler Kommutierungsvorgänge separate Kommutierungssignale als Testsignale auf die Leistungsstufe gegeben werden. Dies geschieht in vergleichsweise rascher Folge. Zu jedem Testsignal gehört ein Anstieg des Motorstromes über die Zeit, wie er z.B. am Meßpunkt 267 abgegriffen werden kann. Aus diesem Verlauf des Motorstroms kann auf die (veränderliche) Induktivität einer Motorspule geschlossen werden. Dies geschieht zum Beispiel dadurch, daß die Zeit bestimmt wird, die benötigt wird, bis der Gesamtmotorstrom einen vorgegebenen Schwellenwert überschreitet. In einer anderen Vorgehensweise wird nach einem vorgegebenen Zeit ab Einsatz der Motorbestromung überprüft, welche Höhe der Gesamtmotorstrom besitzt.
Durch Maßnahmen der vorgenannten Art erhält man in der Regel einen Satz unterschiedlich großer Meßwerte. Diese unterliegen einer gewissen, systematischen Verteilung, aufgrund derer es möglich ist, die Position des Rotors (oder Läufers ) eines Elektromotors zumindest über 360 deg. el. mit hoher Genauigkeit zu bestimmen. Hierzu wird die Verteilung einer Mustererkennung unterzogen, wie unten beschrieben.
Als Ergebnis resultiert eine zugehörige Beziehung zwischen Meßwerten der genannten Art und einem Lage-Winkel. Dies zeigt Fig. 2 A und 2 B.

In Fig. 2 A sind mit gleichmäßigem Abstand von links nach rechts Abszissenabschnitte aufgetragen, zu denen Meßwerte L1, L2, ...., L6 gehören, die periodisch nach rechts fortgesetzt sein können. Diese Meßwerte sind sog. Stützwerte einer Funktion 230, deren genauer Verlauf normalerweise jedoch unbekannt ist. Von Interesse für die Vorgehensweise ist jedoch eine anteilige, zugrundeliegende Grundwelle 231 dieser Funktion. Diese Grundwelle ist sinusförmig, besitzt eine Amplitude R und eine Phasenlage bezüglich des Koordinatenursprungs von Fig. 2 B mit dem Maß phi o , wie das in Fig. 2 B ebenfalls dargestellt ist.

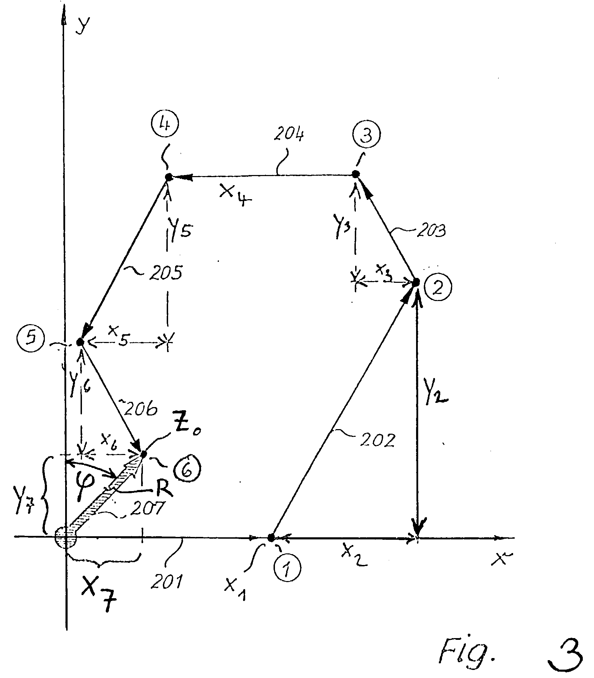

Die Ermittlung der Kennwerte R und phi o gelingt mit einem Verfahren zur Mustererkennung, wie in Fig. 3 dargestellt.

Bei z.B. sechs Meßwerten gemäß Fig. 2 werden die Meßwerte gemäß einer Vektoraddition addiert. Die Größe der einzelnen Vektoren entspricht dabei der Größe der Meßwerte.
Die Richtung der einzelnen Vektoren entspricht jedoch den Richtungen eines gleichmäßigen n-Ecks, welches auf der Abszisse aufliegt. Im hier dargestellten Fall haben die Vektoren somit Richtungen von 0 deg., 60 deg., 120 deg., 180 deg. etc. In einer anderen Formulierung des gleichen Sachverhaltes können die Richtungen der einzelnen Vektoren auch als n-te Einheitswurzeln beschrieben werden, wobei es sich dann um sog. komplexwertige Größen handelt.
Da diese Zusammenhänge dem Fachmann geläufig sind, soll an dieser Stelle nicht weiter darauf eingegangen werden.
Wenn man nun die einzelnen Meßwerte aus Fig. 2 A so aufträgt, wie das in Fig. 3 gezeigt ist und wobei dem Meßwert L1 der Vektor 201, dem Meßwert L2 der Vektor 202 etc. zugeordnet ist, so erhält man als Resultat einer zugehörigen Vektoraddition den Vektor R mit der Bezugsziffer 207. Die Länge dieses Vektors ist die Amplitude der Grundwelle ( sog. 1. Harmonische) gemäß Fig. 2 B. Der Winkel phi der Fig. 3 entspricht dem Phasenwinkel phi o der Fig. 2 B.

Es ist bekannt, daß eine Motorkommutierung vorteilhaft genau dann ausgeführt wird, sobald ein Rotor eines Motors gewisse mechanische Grenzwinkel überschritten hat. Solche Überschreitungen können durch das oben beschriebene Verfahren eindeutig festgestellt werden. Mit diesem Zusammenhang kann die Ansteuerelektronik daher nicht nur die Rotorlage bestimmen, sondern auch folgerichtig die erforderliche Motorkommutierung je nach Rotorlage und vorgegebener Bewegungsrichtung eines Motors vornhmen.

Die Bestimmung der Größen R und phi o obliegt also ebenfalls der Ansteuerelektronik. Es ist vorteilhaft, die erforderliche Zeit zur Bestimmung dieser Größen auf ein Minimum zu beschränken, um erforderliche Kommutierungen rechtzeitig, also nicht verspätet auszuführen.

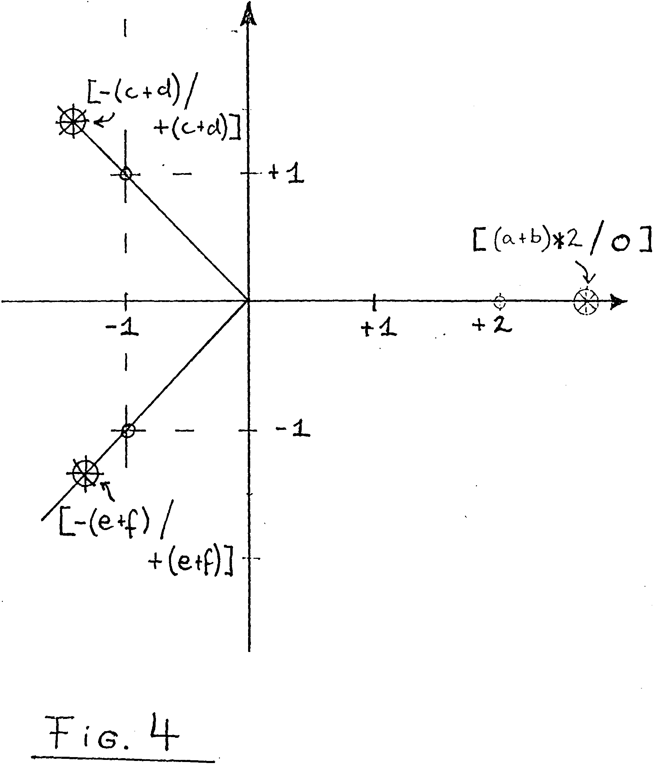

Erfindungsgemäß kommen hierzu mehrere Verfahren in Betracht, von denen ein erstes in Fig. 4 dargestellt ist.

Dieses betrifft eine Verteilung von vorzugsweise sechs Meßwerten, welche wie oben beschrieben zu einer summarischen Größe in Form eines Vektors zusammengefaßt werden sollen.

Erfindungsgemäß werden anstelle der exakten Richtungen für zu addierende Vektoren solche Richtungen gewählt, die sich durch Tangens-Werte auszeichnen, welche durch das Verhältnis kleiner ganzer Zahlen wie z.B. 2:3, 7:8 usw.bestimmt sind.

Es ist vorteilhaft, folgende Verfahrensschritte auszuführen:

Zunächst sind je zwei sukzessiv folgende Meßwerte paarweise additiv zusammenzufassen, was in diesem Falle zu drei neuen Zahlenwerten (Kompositwerten ) führt.

In einem zweiten Schritt werden ein x-Register und ein y-Register mit dem Wert null vorbelegt.

In einem dritten Schritt wird der erste Kompositwert mit zwei multipliziert und zum Inhalt des x-Registers addiert.

In einem vierten Schritt wird der zweite Kompositwert vom Inhalt des x-Registers subtraktiv abgezogen

In einem fünften Schritt wird der zweite Kompositwert zum Inhalt des y-Registers addiert.

In einem sechsten Schritt wird der dritte Kompositwert vom Inhalt des x-Registers abgezogen.

In einem siebten Schritt wird der dritte Kompositwert vom Inhalt des y-Registers abgezogen.

In einem achten und folgenden Schritten wird eine Zuordnung zwischen Inhalten des x- und des y-Registers und einer von sechs Kommutierungsmaßnahmen für den Motor herbeigeführt:
Ist das y-Register größer oder gleich Null, so ist entweder Kommutierungsmaßnahme 1, 2 oder 3 zu wählen, anderenfalls 4, 5 oder 6 in Abhängigkeit der folgenden Zusatzbedingungen :
Ist das x-Register größer oder gleich dem Betrag vom y-Register, so ist entweder Kommutierungsmaßnahme 1 oder 6 zu wählen
Ist das x-Register jedoch kleiner als der Betrag des y-Registers so ist eine der Kommutierungsmaßnahmen 2, 3, 4, oder 5 zu wählen in Abhängigkeit der folgenden Randbedingungen:
Ist der Betrag vom x-Register größer oder gleich dem Betrag vom y-Register, so ist Kommutierungsmaßnahme 3 oder 4 zu wählen, anderenfalls, wenn der Betrag vom x-Register kleiner ist als der Betrag vom y-Register, so ist Kommutierungsmaßnahme 2 oder 5 zu wählen.

In einem letzten Schritt ist die Kommutierungsmaßnahme auszuführen, d.h. die Leistungsstufe 26 ist über die Kommutierungsleitungen 261 bis 266 mit dem korrekten Kommutierungssignal zu versehen.

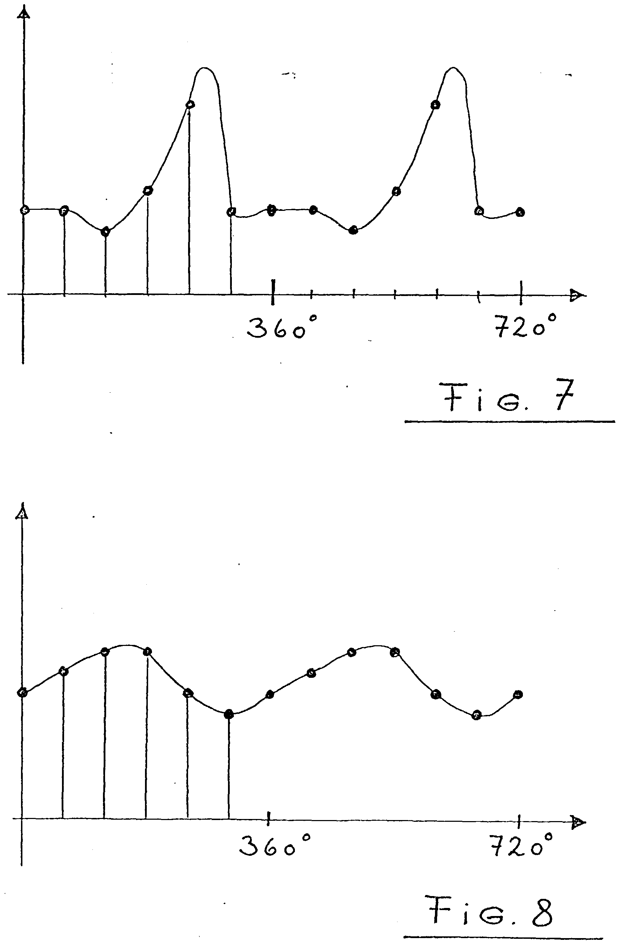

Diese Auswertung erfordert, sofern die sechs Meßwerte bereits vorliegen, etwa 60 Rechnerschritte und kann daher mit modernen Prozessoren in etwa 5 bis 10 Mikrosekunden ausgeführt werden. Das im Verhergehenden beschriebene Entscheidungsverfahren wird in Fig. 6 in komprimierter Form erläutert. Fig. 6 bezieht sich dabei auf die geometrischen Verhältnisse gemäß Fig. 5.

Ein weiteres Verfahren verwendet die gleiche Entscheidungssequenz, d. h. es ist ein x-Register und ein y-Register vorhanden zur Repräsentation eines resultierenden Vektors.
Dieses Verfahren faßt jedoch nicht einzelne Meßergebnisse paarweise zusammen, sondern verwendet alle , hier z.B. sechs Meßergebnisse, nach folgenden Verfahrensschritten:
In einem ersten Schritt werden ein x-Register und ein y-Register mit dem Wert null vorbelegt.

In einem zweiten Schritt wird der Inhalt des x-Registers um das zweifache des ersten Meßwerts erhöht (d.h. additiv vergrößert).

In einem zweiten Schritt wird sowohl das x-Register als auch das y-Register um den zweiten Meßwert erhöht.

In einem dritten Schritt wird das y-Register um den dritten Meßwert erhöht , während das x-Register um den dritten Meßwert erniedrigt wird (d.h. subtraktiv reduziert wird).

In einem vierten Schritt wird das x-Register um das zweifache des vierten Meßwertes erniedrigt.

In einem fünften Schritt wird sowohl das x-Register als auch das y-Register um den fünften Meßwert reduziert.

In einem sechsten Schritt wird das x-register um den sechsten Meßwert erhöht, während das y-Register um den sechsten Meßwert erniedrigt wird.

In einem siebten und folgenden Schritten wird eine Zuordnung zwischen Inhalten des x- und des y-Registers und einer von sechs Kommutierungsmaßnahmen für den Motor herbeigeführt, so wie sie oben beschrieben wurde und in Fig. 5 und Fig. 6 verdeutlicht ist.

In einer weiteren Ausgestaltung sind nicht nur Kommutierungsmaßnahmen auszuführen, sondern ein Motor soll z.B. während des Stillstandes auf seine jeweilige Rotorposition abgefragt werden.

Zu diesem Zweck wird der Inhalt der x-Registers durch den Wert des y-Registers dividiert und über die Arcustangens-Funktion in einen Winkelwert umgerechnet.

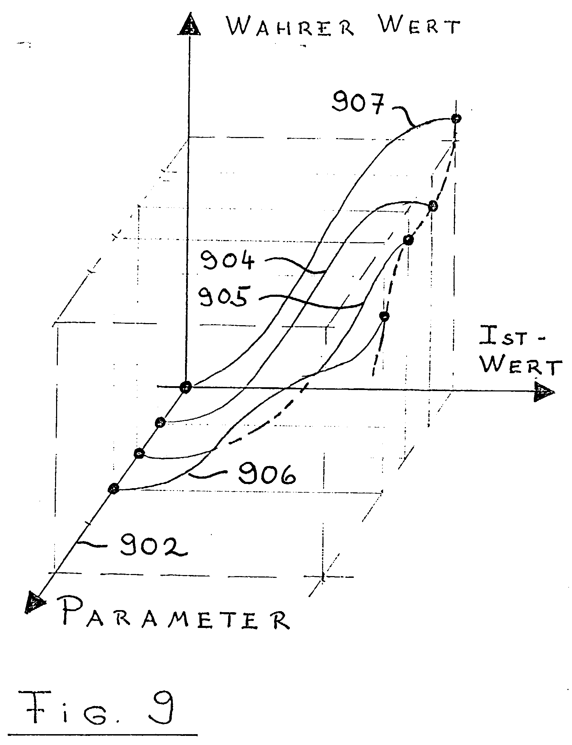

Ein solcherart aufgefundener Winkel stimmt gewöhnlich gut mit der Winkellage eines Rotors (Läufers) (in elektrischen Winkeleinheiten), sofern die genannten Meßwerte eine Funktion repräsentieren, welche relativ oberwellenarm ist, wie das in Fig. 8 gezeigt ist.

Die Zuordnung von numerisch ermittelten Kennwerten zu wahrem Winkelwert der Rotorposition gestaltet sich daher in diesem Falle wenig aufwendig.

Ist hingegen die den Meßwerten zugrundeliegende Funktion oberwellenreich, wie das in Fig. 7 dargestellt ist, kann durch weitere Verfahrensschritte eine Korrektur der numerisch ermittelten Kennwerte zu einem wahren Winkelwert herbeigeführt werden.

Dies zeigt Fig. 9.

Hier ist eine Schar von Zuordnungen dargestellt, die über die Kurven (Funktionen ) 904, 905, 906, 907 einen numerisch ermittelten Kennwert (Istwert) dem wahren Winkelwert einer Rotorposition eines Motors eindeutig zuordnen. So ist z.B. für jeden Punkt der Kurve 907 feststellbar, zu welchem Istwert dieser gehört bzw. zu welchem wahren Wert. Auf diese Weise ist jeder der möglichen Istwerte mit den zugehörigen wahren Werten verknüpft.

Die Kurve 907 zeigt eine solche Zuordnung für ein Beispiel, bei dem die Messung der Rotorposition eines Motors bei niedriger Temperatur des Motors durchgeführt wird.

Bei höheren Motortemperaturen liegt gegebenenfalls eine andere Zuordnung vor, die durch andere Kurven veranschaulicht wird und auf die in einem solchen Falle zurückzugreifen ist.

Dies verdeutlichen Kurven 904, 905, 906, die einen anderen Startpunkt auf der Parameterachse 902 besitzen. Als variabler Parameter ist in diesem Beispiel die Motortemperatur zu verstehen. Anstelle der Temperatur kann natürlich auch ein anderer, gegebenenfalls auch mehrere Parameter treten, wie z.B. der Mittelwert des Teststromes usw.

In einer weiteren Ausgestaltung wird eine solche tabellen- oder funktionsgesteuerte Korrektur davon abhängig gemacht, welche Höhe oder Winkellage die zweite oder eine höhere Harmonische einer Funktion aufweist, wobei wie im vorhergehenden eine solche Funktion durch eine Anzahl von Stützwerten dargestellt wird und die Stützwerte eine geordnete Folge von Meßwerten wiedergeben. Die Meßwerte leiten sich insbesondere von Strom/Zeitmessungen an einzelnen Motorspulen ab oder betreffen den Verlauf des Motor-Gesamtstroms.

## Patentansprüche

1. Verfahren zur Kommutierung oder zur Drehlageerkennung von bürstenlosen Gleichstrommotoren ohne externe Positionssensoren,
- es wobei eine Ansteuerelektronik (100) mit einem Stromeingang (101)
- und eine Leistungsstufe (26) zur Bestromung von Motorspulen eines Motors (10) vorgesehen wird, mit folgenden Schritten :
- die Ansteuerelektronik gibt Kommutierungssignale für den Motor (10) vor und greift Testsignale in Strom- oder Spannungsform an den Motorwicklungen ab,
- die Testsignale bilden eine geordnete Folge von Werten, die als Stützwerte einer zu bestimmenden Funktion verwendet werden,
- die durch die Stützwerte definierte Funktion enthält eine sinusförmige Grundwelle, und
- die Phasenlage dieser Grundwelle, relativ zu der genannten Folge von Stützwerten, wird durch eine Vektoraddition oder eine Addition komplexer Zahlen, allgemein durch eine Schwerpunktanalyse oder Fouriertransformation ermittelt, und
- die Richtungen zu addierender Vektoren werden durch Winkel bestimmt, deren Tangens-Werte durch Verhältnisse kleiner ganzer Zahlen definiert sind.

2. Verfahren nach Anspruch 1, dadurch gekennzeichnet, daß die Testsignale oder Stützwerte paarweise zusammengefaßt werden.

3. Verfahren nach Anspruch 1 oder 2, dadurch gekennzeichnet, daß eine Motorkommutierung anhand eines Vergleichs von Vektorkomponenten durchgeführt wird, wobei die Vektorkomponente bzw. deren Beträge gemäß einem Entscheidungsbaum in direkter Form verglichen werden.

4. Verfahren nach einem der Ansprüche 1 bis 3, dadurch gekennzeichnet, daß zum Zwecke einer Testbestromung des Motors (10) eine Motorstromstärke so gewählt ist, daß eine durch die Meßwerte definierte Kurve möglichst oberwellenarm ist.

5. Verfahren nach Anspruch 4, dadurch gekennzeichnet, daß bei n auszuwertenden oder zusammengefaßten Meßwerten eine n-1 te oder eine n + 1 te Harmonische nicht oder nur in geringem Maße vorhanden ist.

6. Verfahren nach einem der Ansprüche 1 bis 5, dadurch gekennzeichnet, daß eine Korrektur eines ermittelten Winkel-Istwertes zu einem wahren Wert anhand mehrerer Einzelkurven oder einer Kurvenschar vorgenommen wird nach Maßgabe eines variablen Parameters.

7. Verfahren nach Anspruch 6, dadurch gekennzeichnet, daß die Temperatur eines Elektromotors als variabler Parameter herangezogen wird.

8. Verfahren nach Anspruch 6, dadurch gekennzeichnet, daß der Mittelwert eines zum Zwecke der Positionsermittlung verwendeten Motorstroms als variabler Parameter herangezogen wird.

9. Verfahren nach einem der Ansprüche 1 bis 8, dadurch gekennzeichnet, daß ein Wert für die Rotorstellung eines Motors ermittelt wird, und daß dann der so ermittelte Wert anhand einer Korrekturtabelle oder Korrekturkurvenschar korrigiert wird, deren Korrekturwerte von der Phasenlage der zweiten oder einer höheren Harmonischen einer durch Stützwerte repräsentierten Funktion abhängen, welche Stützwerte durch eine geordnete Folge von Meßwerten gebildet werden, welche durch eine Folge von Motorbestromungen gewonnen werden.

10. Anordnung zur Durchführung des Verfanrens nach einem der Ansprüche 1 bis 9, dadurch gekennzeichnet, daß eine Ansteuerelektronik (100) mit einem Stromeingang (101) und eine Leistungsstufe (26) zur Bestromung von Motorspulen eines Motors (10) vorgesehen sind, und daß die Ansteuerelektronik Kommutierungssignale für den Motor vorgibt und Testsignale in Strom- oder Spannungsform an den Motorwicklungen abgreift, wobei die Testsignale eine geordnete Folge von Werten, die als Stützwerte einer zu bestimmenden Funktion verwendet werden, bilden, die durch die Stützwerte definierte Funktion eine sinusförmige Grundwelle enthält und die Phasenlage dieser Grundwelle relativ zu der genannten Folge von Werten durch eine Vektoraddition oder eine Addition komplexer Zahlen, allgemein durch eine Schwerpunktanalyse oder Fouriertransformation ermittelt wird, und die Richtungen der zu addierenden Vektoren durch Winkel bestimmt werden, deren Tangens-Werte durch Verhältnisse kleiner ganzer Zahlen definiert sind.

## Claims

1. A method of controlling or recognising the rotary position of brushless direct current motors with no external position sensors, whereby an electronic control means (100) is provided and has a current input (101) and a power stage (26) for supplying current to the coils of a motor (10), in the following stages:
- the electronic control means delivers commutating signals for the motor (10) and scans the motor windings for test signals in current or voltage form,
- the test signals form an ordered sequence of values which are used as values supporting a function which is to be defined,
- the function defined by the supporting values contains a sinusoidal fundamental wave and
- the phase position of this fundamental wave in relation to the said sequence of supporting values is ascertained by a vector addition or an addition of complex numbers, generally by a centre of gravity analysis or Fourier transformation and
- the directions of vectors to be added are determined by angles the tangent values of which are defined by ratio of small whole numbers.

2. A method according to Claim 1, characterised in that the test signals or supporting values are grouped together in pairs.

3. A method according to Claim 1 or 2, characterised in that motor commutation is carried out on the basis of a comparison of vector components, whereby the vector components or their amounts are directly compared in accordance with a decision algorithm.

4. A method according to one of Claims 1 to 3, characterised in that for the purpose of applying a test current to the motor (10), a motor current strength is so chosen that a curve defined by the measured values is as far as possible of very low harmonic content.

5. A method according to Claim 4, characterised in that for n measured values which are to be evaluated or combined, a n-1th or a n+1th harmonic is not present or is only present to a limited extent.

6. A method according to one of Claims 1 to 5, characterised in that a correction of an ascertained actual angular value to a true value is carried out on the basis of several individual curves or a plurality of curves as a function of a variable parameter.

7. A method according to Claim 6, characterised in that the temperature of an electric motor is used as the variable parameter.

8. A method according to Claim 6, characterised in that the mean value of a motor current used for the purpose of position ascertainment is used as the variable parameter.

9. A method according to one of Claims 1 to 8, characterised in that a value for the rotor position of a motor is ascertained and in that then the value thus determined is corrected on the basis of a correction table or group of correction curves the correction values of which are dependent upon the phase position of the second or a higher harmonic of a function represented by supporting values which are constituted by an ordered sequence of measured values which are obtained by a sequence of motor energisations.

10. An arrangement for carrying out the method according to one of Claims 1 to 9, characterised in that an electronic control means (100) is provided and has a current input (101) and a power stage (26) for supplying current to the coils of a motor (10) and in that the electronic control means delivers commutation signals for the motor and obtains test signals in current or voltage form from the motor windings, whereby the test signals form an ordered sequence of values which are used as supporting values for a function to be determined and in that the function defined by the supporting values comprises a sinusoidal fundamental wave and the phase position of this fundamental wave in relation to the said sequence of values is ascertained by a vector addition or an addition of complex numbers, generally by a centre of gravity analysis or Fourier transformation and the directions of the vectors to be added are determined by angles the tangent values of which are defined by ratios of small whole numbers.

## Revendications

1. Procédé de commutation ou de détection de la position de rotation de moteurs à courant continu sans balai, non munis de capteur de position externe, dans lequel :
- il est prévu une électronique de commande (100) avec une entrée de courant (101),
- et un étage de puissance (26) pour alimenter les bobines d'un moteur (10),
- comprenant les étapes suivantes :
- l'électronique de commande fournit des signaux de commutation au moteur (10) et prend les signaux de contrôle sous forme de courant ou de tension sur les enroulements du moteur,
- les signaux de contrôle forment une suite ordonnée de grandeurs utilisées comme grandeurs de soutien pour une fonction déterminée,
- la fonction déterminée par les grandeurs de soutien contient une onde de base, sinusoïdale, et
- la phase de cette onde de base par rapport à la suite indiquée de valeurs de soutien est déterminée par une addition vectorielle ou une addition de nombres complexes, de manière générale par une analyse de centre de gravité ou une transformation de Fourier et
- les directions des vecteurs à additionner sont définies par des angles dont les tangentes sont définies par des nombres entiers relativement petits.

2. Procédé selon la revendication 1,
caractérisé en ce qu'
on regroupe par paires les signaux de contrôle ou les valeurs d'appui.

3. Procédé selon la revendication 1 ou 2,
caractérisé en ce qu'
on effectue une commutation du moteur par une comparaison des composantes vectorielles, ces composantes ou leur amplitude étant comparées en forme directe selon une décision ramifiée.

4. Procédé selon l'une des revendications 1 à 3,
caractérisé en ce que
pour faire une alimentation de contrôle du moteur (10) on choisit une intensité de courant pour le moteur pour qu'une courbe définie par les valeurs de mesure contienne aussi peu que possible d'harmoniques.

5. Procédé selon la revendication 4,
caractérisé en ce que
pour n valeurs à regrouper ou à exploiter, il n'y a pas, ou que d'une manière très réduite, une harmonique d'ordre (n -1) ou d'ordre (n + 1).

6. Procédé selon l'une des revendications 1 à 5,
caractérisé en ce qu'
on effectue une correction de la valeur réelle angulaire, déterminée, pour une valeur vraie à l'aide de plusieurs courbes séparées ou d'un faisceau de courbes selon l'indication d'un paramètre variable.

7. Procédé selon la revendication 6,
caractérisé en ce qu'
on utilise comme paramètre variable la température d'un moteur électrique.

8. Procédé selon la revendication 6,
caractérisé en ce que
comme paramètre variable on utilise la valeur moyenne d'une intensité de courant de moteur servant à déterminer la position.

9. Procédé selon l'une des revendications 1 à 8,
caractérisé en ce qu'
on détermine une valeur pour la position du rotor d'un moteur et la valeur ainsi déterminée est corrigée à l'aide d'un tableau de correction ou d'un faisceau de courbes de correction, dont les valeurs de correction dépendent de la position de phase de la seconde harmonique ou d'une harmonique supérieure d'une fonction représentée par les valeurs d'appui, ces valeurs d'appui étant formées par une suite ordonnée de grandeurs de mesure obtenues par une suite de courants d'alimentation du moteur.

10. Dispositif pour la mise en oeuvre du procédé selon l'une des revendications 1 à 9,
caractérisé en ce qu'
il comprend une électronique de commande (100) avec une entrée de courant (101) et un étage de puissance (26) pour alimenter les bobines d'un moteur (10) et cette électronique de commande prédétermine des signaux de commutation pour le moteur ainsi que des signaux de contrôle sous la forme d'intensité et de tension prises sur les enroulements du moteur, les signaux de contrôle constituant une suite ordonnée de valeurs utilisées comme grandeurs d'appui pour une fonction à définir, cette fonction définie par les valeurs d'appui ayant une onde de base sinusoïdale dont la phase par rapport à la suite indiquée de valeurs est définie par une addition vectorielle ou une addition de nombres complexes, de manière générale par une analyse de centre de gravité ou une transformation de Fourier et les directions des vecteurs additionnés sont définies par des angles dont les tangentes sont définies par des nombres entiers relativement petits.
